# EUROPEAN PATENT SPECIFICATION

(11) **EP 0 503 655 B1**
(45) Date of publication and mention of the grant of the patent: **11.06.1997**
(21) Application number: 92104347.7
(22) Date of filing: 13.03.1992
(51) Int. Cl.: C03B 37/06, C03C 13/00, D01F 9/08

(54) **A method and apparatus for producing fibers**
Verfahren und Vorrichtung zur Herstellung von Fasern
Procédé et appareil de production des fibres

(30) Priority: 13.03.1991 JP 126966/91; 15.05.1991 JP 205005/91
(43) Date of publication of application: 16.09.1992
(73) Proprietor: TOSHIBA MONOFRAX COMPANY LTD., Chuo-ku, Tokyo (JP)
(72) Inventor: Endo, Shigeo, Narita-shi, Chiba-ken (JP); Kawashima, Haruo, Narita-shi, Chiba-ken (JP); Hirata, Kimo, Katori-gun, Chiba-ken (JP); Misu, Yasuo, Narita-shi, Chiba-ken (JP); Itoh, Akira, Chiba-shi, Chiba-ken (JP)
(74) Representative: Witte, Alexander, Dr.-Ing.

(56) References cited:
- EP-A- 0 136 767
- DE-B- 1 942 991
- DE-B- 1 966 255
- DE-C- 429 554
- US-A- 4 185 981
- PATENT ABSTRACTS OF JAPAN vol. 12, no. 270 (C-515)(3117) 27 July 1988 & JP-A-63 050 526 (TOSHIBA MONOFURATSUKUSU KK) 3 March 1988

## Description

The invention relates to a method for producing fibers, comprising the steps of fusing a fiber material made of a ceramic material comprising Al₂O₃ and SiO₂ so as to obtain a molten fiber material, forming a flow of the molten fiber material, applying a liquid fluid jet onto the flow of the molten fiber material so as to produce many fibers.

The invention further relates to an apparatus for producing fibers, comprising means for thermally fusing a fiber material made of a ceramic material comprising Al₂O₃ and SiO₂ so as to obtain a molten fiber material, means for discharging the molten fiber material as a continuous flow thereof, at least one liquid jet nozzle means for applying a liquid jet to the flow for producing many fibers.

A method and an apparatus of this kind are known from documents DE-B-1 942 991 and DE-B-1 966 255. The nozzle discharging the jet is arranged in that the jet is directed tangentially to the flow of molten ceramic material. The embodiments described in these documents in more detail concern nozzles for discharging a jet of pressured air. It is indicated that in case of using a water jet, the fibers obtained are of coarse structure.

Within document DE-C-429 544 a method and a device for dividing liquid slags by pressurized liquid or gaseous mediums are described. The liquid slag is divided into granules.

Document EP-A-0 136 767 discloses a process for manufacturing ceramic fibers comprising Al₂O₃, SiO₂ and Cr₂O₃ by a blowing or a spinning process.

Document US-A-4 185 981 discloses a method and apparatus for producing fibers from a heat-softening material with a high speed gas stream.

Document JP-A-63 050 526 discloses a method and an apparatus for producing ceramic fibers containing Al₂O₃ and SiO₂ by blasting a high-speed air stream through a nozzle against the falling molten material.

Well-known examples of an inorganic amorphous fiber material are: slags discharged from various glass furnaces and blast furnaces; basic rocks such as basalt; clay minerals such as Kaolin; and mixtures of Bayer's process alumina with quartz sand or silica sand.

Such inorganic amorphous fiber materials are discharged continuously from a cupola or electric furnace through its tap hole in the form of a fine flow and then elongated by means of an outer force such as an air jet so as to make fibers. Three typical fiber-producing methods are:
(A) a drawing method by which continuous glass fibers are produced by drawing continuously a fiber material from a nozzle;
(B) a throwing method or a spinning method by which fibers are produced by centrifugal force of a spinner which is a rotation disc for making fibers; and
(C) a blowing method by which fibers are produced by a gas flow such as air jet at a high speed.

According to a conventional blowing method, a pressurized gas such as air is jetted out through a nozzle so as to obtain a flow speed near the sonic velocity. A molten fiber material flow is guided into such a gas flow so as to produce fine fibers by means of the gas jet's impact on the molten fiber material flow.

The conventional blowing method has at least three defects. A first defect is that a very large energy is required in order to compress air for the jetting purpose. For example, in case Al₂O₃-SiO₂ ceramic fibers are produced, a molten fiber material flow is discharged from a melting furnace at a flow rate of 400 kg/h, while an air pressure is several kilograms per cm². In order to produce such an air pressure, an air compressor must have about 300 horse power (255kw). Therefore, the energy necessary for making fibers is 255 kwh/400 kg = 0.64 kwh/kg. In comparison with this energy, the energy necessary for fusing an Al₂O₃-SiO₂ material is about 1.8 kwh/kg. Thus, the fiber-making energy is not small.

A second defect of the conventional blowing method is to need a means for collecting fibers. A jet air flowing at a high speed near the sonic velocity induces some ambient air into a collecting chamber so that the volume of air to be discharged from the collecting chamber is several times as large as that of the jet air. If a discharging capacity is small, a pressure in the collecting chamber becomes larger than that of the atmosphere so that some fibers may be discharged out of the collecting chamber. In such a case, a large filter device must be provided so as to separate the fibers from the air. Also, a dust collector must be provided so as to keep the ambient atmosphere clean. Therefore, the costs of equipments and operation thereof are large. For example, the electric power required for operating the filter device and the dust collector is 0.5 kwh/kg in total.

A third defect of the conventional blowing method is that a rate of making fibers is low. Some shots are produced in fibers so as to affect badly a low heat conductivity of the ceramic fibers functioning as a heat insulating material.

The object of this invention is to improve the method and apparatus for making fibers, known from DE-B-1 942 991.

The above object is achieved by a method for producing fibers, mentioned at the outset, in that a ceramic material essentially consisting of Al₂O₃-SiO₂ or Al₂O₃-SiO₂-Cr₂O₃ is chosen and that the liquid jet cuts the flow of molten material and has an average liquid pressure of 980,6 to 19.612 N/cm² (100 to 2000 kgf/cm²) and an average flow rate of 15 to 100 l/min.

The above object is further achieved by an apparatus for producing fibers, mentioned at the outset, wherein said liquid jet nozzle means comprises at least three round type water jet nozzles arranged in such a manner that said at least three water jet nozzles produce at least three water jets cutting said flow of said molten fiber material at an inclined angle, each of said round type water jet nozzles having an internal diameter ranging from 0.5 to 3 mm so as to apply a liquid jet having an average liquid pressure of 980.6 to 19,612 N/cm² (100 to 2000 kgf/cm²) and an average flow rate of 15 to 100 l/min and to cut a flow of a ceramic material essentially consisting of Al₂O₃-SiO₂ or Al₂O₃-SiO₂-Cr₂O₃.

According to this invention, a molten fiber material is shaped into many fibers by means of a liquid jet in place of a pressurized gas or air. A preferred example of the liquid is water or any combination of water with any other substance in a dissolved or suspended condition.

According to this invention, while a thermally molten fiber material continuously falls down in the form of a fine flow, a water jet is applied onto the molten fiber material flow so as to cut it. The water jet moves at a high speed so that a very large impact or pressure can be applied onto the material. Preferred machines for producing water jet are jet cleaners, aqua jet cutters or the like produced by Sugino Machine Limited in Japan. Those comprise a compressor for pressurizing water and a nozzle for jetting it.

An engine for actuating the compressor preferably has a horse power of 20 to 150 (15 to 111 kw) for producing a pressurized liquid so that a working pressure ranges from 539.4 to 39,228 N/cm² (55 to 4,000 kgf/cm²) and a discharge capacity ranges from 10 to 390 l/min. An engine output is preferably 50 % or less when the compressor is actuated, so as to produce an average liquid pressure of 980.6 to 19,612 N/cm² (100 to 2,000 kgf/cm²) at an average flow speed of 15 to 100 l/min.

A water jet can be produced by a single nozzle, but it is preferable to use at least two nozzles. In case of a single nozzle, the water jet is preferably arranged so as to cut a fine molten fiber material flow at an angle of 10 to 90 degrees in respect to the axis of the nozzle. It is also preferable that plural water jets from plural nozzles are arranged so as to cross at an interconnecting point at an angle of 30 to 65 degrees with respect to the axis of each nozzle where a fine molten fiber material flow falls down in a vertical direction at a flow speed of 75 to 500 kg/h. The molten fiber material flow is shaped into many fibers by means of the water jets. The fibers fall down. At that time, they are cooled.

A water tank is positioned under the nozzles for collecting the fibers together with the water in a collecting chamber therein. The fibers may be tentatively stored together with the water.

The collected fibers are dehydrated and then dried. If desired, they are treated by a paper machine before dehydrated and dried. Shots contained in the fibers may be separated from them. Any other steps can be added after and/or before the dehydrating and drying steps.

According to this invention, two types of nozzles can be used for forming a water jet. In one type of nozzles, which is called a round-jet nozzle, the water jet discharged from the nozzle does not diverge to a large degree. For example, the shape of a cross section of a nozzle is a circle, an ellipse, a rectangle or a combination thereof. In case of a circle-jet nozzle, its diameter preferably ranges from 0.5 mm to 3 mm.

In the other type of nozzles, which is called a flat-jet nozzle, the water jet diverges gradually from a discharging point of the nozzle only along a direction but not any direction perpendicular thereto. This type jet nozzle has a shallow groove extending along a straight line on a discharge surface at a right angle to the axis of the nozzle. The shallow groove in the discharge surface is connected at a central portion thereof to a through-hole having a circular cross-section the diameter of which is from 0.5 mm to 3 mm. The shallow groove has a V-shaped section in its depth direction so as to diverge outwardly at an angle of 15 to 35 degrees. The shallow groove has a width of 0.5 mm to 3 mm and a length of 2 mm to 6 mm. A deep and wide groove is joined to the shallow groove so as to extend the shallow groove. The deep and wide groove is gradually deepened and then reaches an outer side portion of the nozzle. For example, a bottom of the deep and wide groove has a width of 3 to 6 mm and extends from the opposite edges of the shallow groove to the outer side portion of the nozzle at an inclined angle of 30 to 60 degrees.

In comparison with gas (air), a liquid can be easily pressurized, and its density is large. The density of water is about 800 times as large as that of air. Thus, kinetic energy or outer force can be applied onto a molten fiber material with a high efficiency. Also, the energy of pressuring the liquid is very small so that a compressor can be small in size. It is easy to form a liquid jet flowing at a speed higher than the sonic speed. A pressurized liquid flow does not induce any ambient atmosphere air to a significant degree.

All shaped fibers may move into a liquid chamber together with the jet liquid. No fiber dust problem occurs. Therefore, it is not necessary to provide any fiber and/or dust collector, an air filter or the like.

A water jet can have excellent convergence. Even fine water jet can have reasonable impact onto a molten fiber material. In particular, a high energy density can be obtained in the form of a fine water jet if it is applied in a high-pressure and high-speed condition. In this case, the volume of water to be consumed is small.

Strong impact of the water jet can produce extremely fine fibers so that the volume of shots can decrease while a size thereof can become small.
Fig. 1 is a perspective view schematically showing an apparatus for making fibers according to a first embodiment of this invention;
Fig. 2 is a perspective view schematically showing an apparatus for making fibers according to a second embodiment of this invention;
Fig. 3 is a perspective view schematically showing an apparatus for making fibers according to a third embodiment of this invention; and
Fig. 4 is a schematic plan view, partly broken, showing the apparatus shown in Fig. 3.

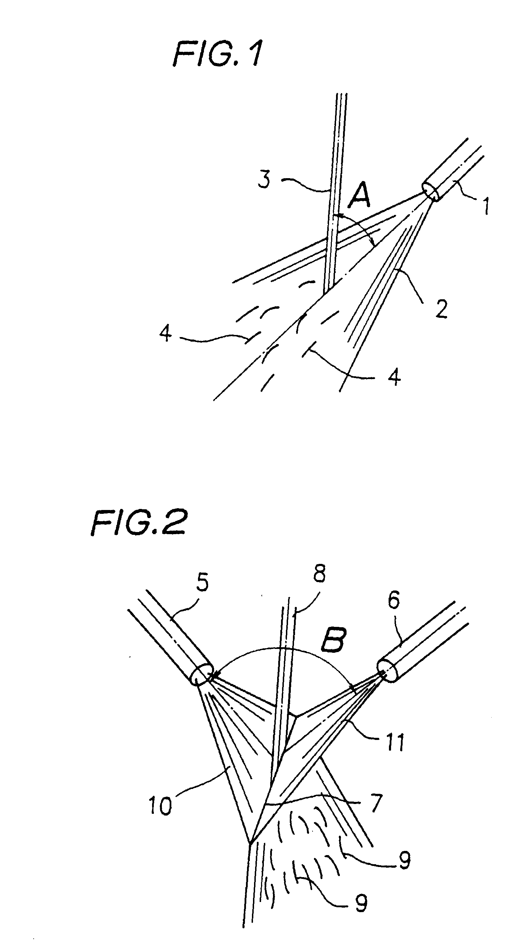

Fig. 1 shows a first embodiment of this invention in which a single flat nozzle 1 is used for producing a water jet 2 at a flow speed of 100 m/sec with a large energy. The water jet 2 has a flat diverging configuration. A thermally molten fiber material 3 continuously flows down in the form of a fine line. The water jet 2 cuts the molten fiber material flow 3 at a predetermined inclined angle A so as to produce many fibers 4. Examples of the fiber material 3 are Al₂O₃-SiO₂ ceramic fiber compositions containing Al₂O₃ 35 to 65 %, SiO₂ 30 to 60 %, and minor impurities. Other examples of the fiber material 3 are Al₂O₃-SiO₂-Cr₂O₃ ceramic fiber compositions containing Al₂O₃ 35 to 65 %, SiO₂ 30 to 60 %, Cr₂O₃ 1 to 6 % and minor impurities.

The angle A between the water jet 2 and the molten flow 3 may include an acute angle at which the water jet 2 moves downwardly and an obtuse angle at which it moves upwardly. Preferably the angle A ranges between 10 degrees and 90 degrees. The best angle A is about 70 degrees. If the angle A is less than 10 degrees, the volume of produced fibers is small, and shots become large in size.

Fig. 2 shows a second embodiment of this invention. Two flat jet nozzles 5, 6 are used for producing two flat water jets 10, 11 which cross along a line 7 where a thermally molten fiber material 8 flows down, so as to produce many fibers 9. The water jets 10, 11 have a similar flat diverging configuration. The fiber material 8 continuously flows down in the form of a fine line. The water jets cut the molten fiber material flow 8. An inclined angle B between the two water jets 10, 11 preferably ranges between 10 degrees and 65 degrees. The best angle A is about 20 to 40 degrees. If the angle B is less than 10 degrees, the volume of produced fibers is small, and shots become large in size. If the angle B is more than 65 degrees, the volume of produced fibers becomes small although shots become small in size.

If two air jet nozzles are used in place of the water jet nozzles 5, 6, some air flows upwardly at an air-jet cross line so that some molten fiber material moves up. Therefore, fibers cannot be produced in a steady manner at a high production efficiency. In case of water jets, fibers can be produced in a steady manner at a high production efficiency.

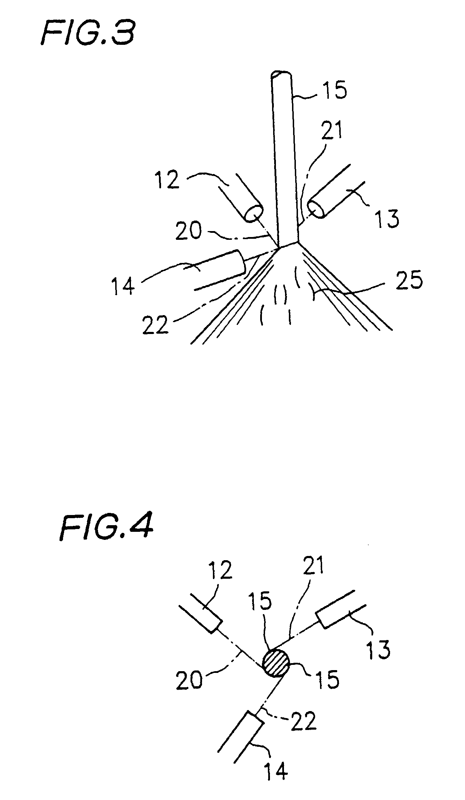

Figs. 3 and 4 show a third embodiment of this invention in which the number of round nozzles is three. In the illustrated embodiment, three round water jet nozzles 12 to 14 are used for producing three water jets 20, 21, 22. A thermally molten fiber material 15 flows down among the nozzles 12 to 14. Each of the three water jets 20, 21,22 flowsat a downwardly inclined angle so as to cut the molten fiber material flow 15. As best shown in Fig. 4, each water jet 20, 21, 22 is preferably a tangent which touches an outer surface of the molten fiber material flow 15. Until the water jet cuts the molten fiber material flow so as to produce many fibers 25, the water jets move without significant diverging phenomena.

It is apparent that four or more water jet nozzles can be arranged in such a manner.

It is possible that a water jet reasonably diverges and then cuts a molten fiber material.

In general, round nozzles can be easily manufactured as fine nozzles, at least in comparison with flat nozzles. A flow speed of water jets of some round nozzles is three times as fast as that of the flat nozzles so as to obtain a large energy density. It is also advantageous that the volume of shots is decreased.

The fibers produced by the water jets usually contain a small amount of water. If desired, the fibers are separated from the water and then dried. However, during the steps of separating shots from the fibers, adjusting the length of the fibers and shaping the fibers into a felt or other various insulations, water is used as a carrier of fibers. In such a case, it is not necessary to separate water from the fibers.

This invention is not limited to the above-stated embodiments only. For example, any liquid jet can be employed in place of water jet. The water for the water jet can contain, as an additive agent, a polymer of acrylic amide, various high molecular agents for aiding water convergence such as a polymer of ethylene oxide, fiber-treatment agents such as a lubricant, and/or various metal powder or various refractory powder such as Al₂O₃, SiO₂, Cr₂O₃.

### EXAMPLES 1, 2

A mixture of Bayer's process alumina 1 part by weight and quartz sand 1 part by weight was fused in an arc furnace of 300 KVA so as to obtain a molten mixture. The molten mixture was vertically discharged through an orifice of a wafer placed at a bottom portion of a spout for the arc furnace. The wafer was made of BN (boron nitride) and had an opening with a diameter of 3 or 4 mm. In Example 1, the diameter of the opening was 4 mm, and an average flow rate of the molten mixture was about 150 kg/h. In Example 2, the diameter of the opening was 3 mm, and an average flow rate of the molten mixture was about 75 kg/h.

Water was pressurized by a compressor equipped with an engine of 112 kw (150 horse power), in particular, JCE-70085 type jet cleaner produced by Sugino Machine Limited in Japan. A working pressure was 6,865 N/cm² (700 kgf/cm²), and a discharge capacity was 72 l/min.

In Example 1, when the compressor was actuated, an engine output was 16 %, and an average pressure was 4,906 N/cm² (500 kgf/cm²), and an average water flow rate was 27 l/min. The total power required for producing fibers was 24 horse power, that is, 18 kw. The required energy per 1 kg was 18 kwh / 150 kg = 0.12 kwh/kg.

In Example 2, when the compressor was actuated, an engine output was 4 %, and an average pressure was 1,961 N/cm² (200 kgf/cm²), and an average water flow rate was 17 l/min. The total power required for producing fibers was 6.1 horse power, that is, 4.6 kw. The required energy per 1 kg was 4.6 kwh / 75 kg = 0.06 kwh/kg.

In both of Example 1 and Example 2, a flat water jet nozzle for a gun was employed. In particular, it was JNF-1021 type flat water jet nozzle for a gun produced by Sugino Machine Limited in Japan. In Example 1, two nozzles 5, 6 were arranged as shown in Fig. 2 in such a manner that two water jets 10, 11 moved downwardly and crossed at an angle B of 60 degrees. In Example 2, two nozzles 5, 6 were also arranged as shown in Fig. 2 in such a manner that two water jets 10, 11 moved downwardly and crossed at an angle B of 30 degrees. The molten fiber material 8 flowed vertically and reached the center of a cross line 7 of the two water jets 10, 11. At that time, the molten fiber material flow 8 was shaped into many fibers by means of the water jets 10, 11 and then fell down. The fibers were collected by a box type collector placed under the nozzles. A water tank was positioned in a bottom of the collector for receiving the fibers and the water therein. Next, the fibers were dehydrated and then dried.

Such produced fibers in bulk were tested. Table 1 shows test conditions and test results.

### EXAMPLE 3

Like in Examples 1 and 2, a mixture of Bayer's process alumina 1 part by weight and quartz sand 1 part by weight was fused in an arc furnace so as to obtain a molten mixtuere. The molten mixture was vertically discharged through an orifice having an opening with a diameter of 4 mm. An average flow rate of the molten mixture was about 150 kg/h. The compressor was the same as that of Examples 1, 2. When the compressor was actuated, an engine output was 27 %, and an average pressure was 6,865 N/cm² (700 kgf/cm²), and an average water flow rate was 29.6 l/min. The total power required for producing fibers was 40 horse power, that is, 30 kw. The required energy per 1 kg was 30 kwh / 150 kg = 0.2 kwh/kg.

As shown in Fig. 1, a single flat water jet nozzle 1 for a gun was arranged in such a manner that the water jet 2 moved downwardly at an angle A of 70 degrees. The molten fiber material flow 3 was shaped into many fibers 4 by means of the water jet 2 and then fell down. The fibers 4 were collected by a water tank. After that, the fibers were dehydrated and then dried.

Such produced fibers in bulk were tested. Table 2 shows test conditions and test results.

### COMPARATIVE EXAMPLE

In a Comparative Example, a conventional blowing method was employed.

A fiber material was fused and vertically discharged through an orifice having an opening as a molten fiber material flow. A portable compressor equipped with an engine of 190 horse power was used for producing a pressurized air. A working pressure of the compressor was 68,6 N/cm² (7 kgf/cm²), and a discharge volume was 19 m³/min.

When the compressor was actuated, an engine output was 75 %, i.e 106.6 kw (143 horse power), and an average pressure was 51 N/cm² (5.2 kgf/cm²), and an average air flow rate was 19 m³/min. The energy required for producing fibers per 1 kg was 107 kwh / 150 kg = 0.71 kwh/kg.

The molten fiber material flow was shaped into many fibers by an air nozzle as disclosed in U.S. Pat. No. 3,476,324. A single air nozzle was arranged so as to blow a pressurized air in a lateral direction so that the vertically flowing molten material and the horizontally blown air crossed at a right angle so as to produce many fibers.

The produced fibers were collected by a box type fiber collector. A metal net was arranged in a bottom portion of the fiber collector. A fan was placed under the net so as to suck the blown air at a flow rate of 100 m³/min. The fibers were filtered by the net so that the air was separated from them and then discharged. The discharged air contained dusts. In order to make the discharged air clean, the dusts in the air had to be separated from the air by filtering it by means of a bag filter type dust catcher operating with 10 kwh.

Such produced fibers in bulk were tested. Table 2 shows test conditions and test results.

The Examples 1 to 3 and the Comparative Example will be explained by referring to Table 1 and Table 2.

The flow rate of the liquid jet in the Example 1 was significantly smaller than that of the air jet of the Comparative Example. Also, the flow rate of each liquid jet in the Examples 2 and 3 was significantly smaller than that of the air jet of the Comparative Example.

The required energy per 1 kg of Example 1 was about 1/6 of that of the Comparative Example. The required energy per 1 kg of Example 2 was about 1/10 of that of the Comparative Example. The required energy per 1 kg of Example 3 was about 1/4 of that of the Comparative Example.

An average diameter of the fibers in bulk of the Examples 1 to 3 was substantially the same as that of the Comparative Example. The volume of the shots having 65 mesh or more which the fibers in bulk contained in the Examples 1 to 3 was about 1/2 of that of the Comparative Example. In the Examples 1 to 3, it was remarkably decreased. Also, the volume of the shots having 65 mesh or less which the fibers in bulk contained in the Examples 1 to 3 was smaller than that of the Comparative Example. It can be observed that the total volume of the shots in each of the Examples 1, 2, 3 was smaller than that of the Comparative Example and the volume of the shots having large sizes in each of the Examples 1, 2, 3 was smaller than that of the Comparative Example.

In the Examples 1 and 2, no dust problems take place with respect to the fine fibers. Thus, it was not necessary to use a dust catcher, so that an arrangement space could be small. In the Comparative Example, a dust problem occured.

According to this invention, a small amount of liquid can produce many fibers in bulk in such a manner that they contain a small number of shots. Therefore, the volume of proper fibers produced per a material unit can be large. In addition, shots contained in the fibers can be small in size. Smooth feeling can be obtained.

The consumed energy for producing fibers is small because the fibers are shaped by the liquid jet. The volume of liquid can be samll. Thus, the energy efficiency is good.

The liquid jet does not induce any substantial ambient air into a collecting means. Thus, it needs only a small collecting space. As no dust problems take place, the atmosphere can be kept clean.

Also, the fibers can be stored together with the liquid. It is easy to treat a large volume of fibers for a limited period of time, for example, during the steps of separating shots from them, dehydrating them and drying them.

**Table 1**

| | Example 1 | Example 2 |
|---|---|---|
| Jet | water | water |
| Engine Power of | 150 | 150 |
| Compressor | horse power | horse power |
| Working Pressure | 700 | 700 |
| of Compressor | kgf/cm² | kgf/cm² |
| Capacity of | 72 | 72 |
| Compressor | l/min. | l/min. |
| Engine Output | 16 % | 4 % |
| in operating | 24 horse power | 6.1 horse power |
| Average Pressure | 500 | 200 |
| in operating | kgf/cm² | kgf/cm² |
| Average Flow Rate | 13.3 | 16.9 |
| in operating | l/min. | l/min. |
| Energy for making | 0.12 | 0.06 |
| fibers | kwh/kg | kwh/kg |
| Average Diameter | 3.5 | 3.8 |
| of fibers | microns | microns |
| Volume of shots | 7.4 % | 8.7 % |
| with 65 mesh or more | | |
| Volume of shots | 33.5 % | 34.3 % |
| with 65 mesh or less | | |

**Table 2**

| | Example 3 | Compar. Example |
|---|---|---|
| Jet | water | air |
| Engine Power of | 150 | 190 |
| Compressor | horse power | horse power |
| Working Pressure | 700 | 7 |
| of Compressor | kgf/cm² | kgf/cm² |
| Capacity of | 72 | 19 |
| Compressor | l/min. | l/min. |
| Engine Output | 27 % | 75 % |
| in operating | 40 house power | 142.5 horse power |
| Average Pressure | 700 | 5.2 |
| in operating | kgf/cm² | kgf/cm² |
| Average Flow Rate | 29.6 | 19 |
| in operating | l/min. | m³/min. |
| Energy for making | 0.2 | 0.7 |
| fibers | kwh/kg | kwh/kg |
| Average Diameter | 3.3 | 3.2 |
| of fibers | microns | microns |
| Volume of shots | 11.1 % | 19.6 % |
| with 65 mesh or more | | |
| Volume of shots | 36.1 % | 39.7 % |
| with 65 mesh or less | | |

## Claims

1. A method for producing fibers, comprising the steps of
- fusing a fiber material made of a ceramic material comprising Al₂O₃ and SiO₂ so as to obtain a molten fiber material (3, 8, 15),
- forming a flow of the molten fiber material (3, 8, 15),
- applying a liquid fluid jet onto the flow of the molten fiber material so as to produce many fibers (4, 9, 25),
characterized in that a ceramic material essentially consisting of Al₂O₃-SiO₂ or Al₂O₃-SiO₂-Cr₂O₃ is chosen, and that the liquid jet (2; 10, 11; 20, 21, 22) cuts the flow of molten material, and has an average liquid pressure of 980.6 to 19,612 N/cm² (100 to 2000 kgf/cm²) and an average flow rate of 15 to 100 l/min.

2. The method according to claim 1, characterized in that the flow of molten fiber material (3, 8, 15) is cut by the liquid jet (2; 10, 11; 20, 21, 22) at an inclined angle (A).

3. The method according to claim 1 or 2, characterized in that the liquid jet (2) is formed by a single nozzle (1) so as to cut the flow of the molten fiber material (3) while it moves down in a vertical direction.

4. The method according to claim 2 or 3, characterized in that the inclined angle (A) ranges from 10 degrees to 90 degrees in respect to the axis of the nozzle (1).

5. The method according to claim 1 or 2, characterized in that the liquid jet (10, 11; 20, 21, 22) is formed by a plurality of nozzles (5, 6; 12, 13, 14) in such a manner that plural liquid jets (10, 11; 20, 21, 22) cut the flow of the molten fiber material (8, 15) when it moves down in a vertical direction.

6. The method according to claim 5, characterized by an inclined angle (B) of 30 degrees to 65 degrees between the axes of the nozzles (5, 6; 12, 13, 14), whereby the main velocity component of the liquid jets is in the direction of the flow of the molten fiber material.

7. The method according to any one of claims 1 - 6, characterized in that the molten fiber material (3, 8, 15) flows down at a flow rate of 75 to 500 kg/h.

8. The method according to any one of claims 1 - 7, characterized in that an energy of producing the fibers (4, 9, 25) by the liquid jet (2; 10, 11; 20, 21, 22) ranges from 0.05 kwh/kg to 0.5 kwh/kg.

9. The method according to any one of claims 1 - 8, characterized in that the molten fiber material (3, 8, 15) contains 35 to 65 % Al₂O₃, 30 to 60 % SiO₂ and minor impurities.

10. The method according to any one of claims 1 - 8, characterized in that the molten fiber material (3, 8, 15) comprises an Al₂O₃-SiO₂-Cr₂O₃ ceramic fiber composition containing 35 to 65 % Al₂O₃, 30 to 60 % SiO₂, 1 to 6 % Cr₂O₃ and minor impurities.

11. The method according to any one of claims 5 - 10, characterized in that the nozzles include at least three round type water jet nozzles (12, 13, 14) arranged in such a manner that the water jet nozzles (12, 13, 14) can produce at least three water jets (20, 21, 22) cutting the flow of the molten fiber material (15) at an inclined angle, and wherein each of the water jets (20, 21, 22) is a tangent which touches an outer surface of the flow of the molten fiber material (15).

12. The method according to claim 11, characterized in that until the water jets (20, 21, 22) cut the flow of the molten fiber material (15) so as to produce many fibers (25), the water jets (20, 21, 22) move without significant diverging phenomena.

13. An apparatus for producing fibers, comprising
- means for thermally fusing a fiber material made of a ceramic material comprising Al₂O₃ and SiO₂ so as to obtain a molten fiber material (15),
- means for discharging the molten fiber material (15) as a continuous flow thereof,
- at least one liquid jet nozzle means (12, 13, 14) for applying a liquid jet to the flow for producing many fibers (25),
characterized by said liquid jet nozzle means (12, 13, 14) comprising at least three round type water jet nozzles (12, 13, 14) arranged in such a manner that said at least three water jet nozzles (12, 13, 14) produce at least three water jets (20, 21, 22) cutting said flow of said molten fiber material (15) at an inclined angle, each of said round type water jet nozzles (12, 13, 14) having an internal diameter ranging from 0.5 to 3 mm so as to apply a liquid jet having an average liquid pressure of 980.6 N/cm² to 19,612 N/cm² (100 to 2000 kgf/cm²) and an average flow rate of 15 to 100 l/min and to cut a flow of a ceramic material essentially consisting of Al₂O₃-SiO₂ or Al₂O₃-SiO₂-Cr₂O₃

14. The apparatus according to claim 13, characterized in that each of the water jets (20, 21, 22) produced by the nozzles (12, 13, 14) is a tangent which touches an outer surface of the flow of the molten fiber material (15)

15. The apparatus according to claim 13 or claim 14, characterized in that a liquid tank is placed under the at least three nozzles (12, 13, 14) for collecting the fibers (4, 9, 25) and the liquid together.

## Patentansprüche

1. Verfahren zum Herstellen von Fasern, mit den Schritten
- Schmelzen eines Fasermaterials, das aus einem keramischen Material mit Al₂O₃ und SiO₂ besteht, so daß ein geschmolzenes Fasermaterial (3, 8, 15) erhalten wird,
- Bilden eines Stromes aus dem geschmolzenen Fasermaterial (3, 8, 15),
- Richten eines flüssigen Fluidstrahles auf den Strom aus dem geschmolzenen Fasermaterial, so daß viele Fasern (4, 9, 25) hergestellt werden,
dadurch gekennzeichnet, daß ein Keramikmaterial gewählt wird, das im wesentlichen aus Al₂O₃-SiO₂ oder Al₂O₃-SiO₂-Cr₂O₃ besteht, und daß der flüssige Strahl (2; 10, 11; 20, 21, 22) den Strom aus dem geschmolzenen Material schneidet und einen mittleren Flüssigkeitsdruck von 980,6 bis 19.612 N/cm² (100 bis 2000 kgf/cm²) und eine mittlere Strömungsgeschwindigkeit von 15 bis 100 l/min aufweist.

2. Verfahren nach Anspruch 1, dadurch gekennzeichnet, daß der Strom aus dem geschmolzenen Fasermaterial (3, 8, 15) durch den flüssigen Strahl (2; 10, 11; 20, 21, 22) unter einem geneigten Winkel (A) geschnitten wird.

3. Verfahren nach Anspruch 1 oder 2, dadurch gekennzeichnet, daß der flüssige Strahl (2) mittels einer einzelnen Düse (1) gebildet wird, so daß der Strom aus dem geschmolzenen Fasermaterial (3) geschnitten wird, wenn er sich in einer vertikalen Richtung nach unten bewegt.

4. Verfahren nach Anspruch 2 oder 3, dadurch gekennzeichnet, daß der geneigte Winkel (A) im Bereich von 10 Grad bis 90 Grad bezüglich der Achse der Düse (1) liegt.

5. Verfahren nach Anspruch 1 oder 2, dadurch gekennzeichnet, daß der flüssige Strahl (10, 11; 20, 21, 22) mittels einer Vielzahl von Düsen (5, 6; 12, 13, 14) derart gebildet wird, daß mehrere flüssige Strahlen (10, 11; 20, 21, 22) den Strom aus dem geschmolzenen Fasermaterial (8, 15) schneiden, wenn er sich in einer vertikalen Richtung nach unten bewegt.

6. Verfahren nach Anspruch 5, gekennzeichnet durch einen geneigten Winkel (B) von 30 Grad bis 65 Grad zwischen den Achsen der Düsen (5, 6; 12, 13, 14), wodurch die Hauptgeschwindigkeitskomponente der flüssigen Strahlen in Richtung des Stromes aus dem geschmolzenen Fasermaterial zeigt.

7. Verfahren nach einem der Ansprüche 1 - 6, dadurch gekennzeichnet, daß das geschmolzene Fasermaterial (3, 8, 15) mit einer Strömungsgeschwindigkeit von 75 bis 500 kg/h abwärts strömt.

8. Verfahren nach einem der Ansprüche 1 - 7, dadurch gekennzeichnet, daß eine Energie zum Herstellen der Fasern (4, 9, 25) durch den flüssigen Strahl (2; 10, 11; 20, 21, 22) im Bereich von 0,05 kwh/kg bis 0,5 kwh/kg liegt.

9. Verfahren nach einem der Ansprüche 1 - 8, dadurch gekennzeichnet, daß das geschmolzene Fasermaterial (3, 8, 15) 35 bis 65 % Al₂O₃, 30 bis 60 % SiO₂ und geringe Anteile Unreinheiten enthält.

10. Verfahren nach einem der Ansprüche 1 - 8, dadurch gekennzeichnet, daß das geschmolzene Fasermaterial (3, 8, 15) eine keramische Faserzusammensetzung aus Al₂O₃-SiO₂-Cr₂O₃ mit 35 bis 65 % Al₂O₃, 30 bis 60 % SiO₂, 1 bis 6 % Cr₂O₃ und geringen Anteilen Unreinheiten aufweist.

11. Verfahren nach einem der Ansprüche 5 - 10, dadurch gekennzeichnet, daß die Düsen wenigstens drei Wasserstrahldüsen (12, 13, 14) vom runden Typ aufweisen, die derart angeordnet sind, daß die Wasserstrahldüsen (12, 13, 14) wenigstens drei Wasserstrahlen (20, 21, 22) erzeugen können, die den Strom aus dem geschmolzenen Fasermaterial (15) unter einem geneigten Winkel schneiden, und wobei jeder der Wasserstrahlen (20, 21, 22) eine Tangente darstellt, die eine äußere Oberfläche des Stromes aus dem geschmolzenen Fasermaterial (15) berührt.

12. Verfahren nach Anspruch 11, dadurch gekennzeichnet, daß sich die Wasserstrahlen (20, 21, 22) bewegen, ohne eine signifikante Divergenz zu zeigen, bis die Wasserstrahlen (20, 21, 22) den Strom aus dem geschmolzenen Fasermaterial (15) schneiden, um viele Fasern (25) herzustellen.

13. Vorrichtung zum Herstellen von Fasern, mit
- Mitteln zum thermischen Einschmelzen eines Fasermaterials, das aus einem keramischen Material mit Al₂O₃ und SiO₂ besteht, so daß ein geschmolzenes Fasermaterial (15) erhalten wird,
- Mittel zum Abgeben des geschmolzenen Fasermaterials (15) als einen kontinuierlichen Strom aus dem geschmolzenen Fasermaterial,
- wenigstens ein Flüssigstrahl-Düsenmittel (12, 13, 14) zum Richten eines flüssigen Strahles auf den Strom zum Erzeugen von vielen Fasern (25),
dadurch gekennzeichnet, daß die Flüssigstrahl-Düsenmittel (12, 13, 14) wenigstens drei Wasserstrahldüsen (12, 13, 14) vom runden Typ aufweisen, die so angeordnet sind, daß die wenigstens drei Wasserstrahldüsen (12, 13, 14) wenigstens drei Wasserstrahlen (20, 21, 22) erzeugen, die den Strom aus dem geschmolzenen Fasermaterial (15) unter einem geneigten Winkel schneiden, wobei jede der Wasserstrahldüsen (12, 13, 14) vom runden Typ einen Innendurchmesser aufweist, der im Bereich von 0,5 bis 3 mm liegt, so daß ein flüssiger Strahl mit einem mittleren Flüssigkeitsdruck von 980,6 N/cm² bis 19.612 N/cm² (100 bis 2000 kgf/cm²) und mit einer mittleren Strömungsgeschwindigkeit von 15 bis 100 l/min erzeugt wird, um einen Strom aus einem keramischen Material schneiden zu können, das im wesentlichen aus Al₂O₃-SiO₂ oder Al₂O₃-SiO₂-Cr₂O₃ besteht.

14. Vorrichtung nach Anspruch 13, dadurch gekennzeichnet, daß jeder der Wasserstrahlen (20, 21, 22), die durch die Düsen (12, 13, 14) erzeugt werden, eine Tangente bildet, die eine äußere Oberfläche des Stromes aus dem geschmolzenen Fasermaterial (15) berührt.

15. Vorrichtung nach Anspruch 13 oder Anspruch 14, dadurch gekennzeichnet, daß ein Flüssigkeitsbehälter unter den wenigstens drei Düsen (12, 13, 14) angeordnet ist, um die Fasern (4, 9, 25) und die Flüssigkeit miteinander aufzufangen.

## Revendications

1. Procédé de production de fibres, comprenant les étapes suivantes :
- la fusion d'un matériau fibreux en matière céramique comprenant de l'Al₂O₃ et du SiO₂, de façon à obtenir une matière fibreuse fondue (3, 8, 15),
- la formation d'un écoulement de cette matière fibreuse fondue (3, 8, 15),
- l'envoi d'un jet de fluide liquide sur l'écoulement de matière fibreuse fondue de façon à produire de nombreuses fibres (4, 9, 25),
caractérisé en ce que la matière céramique choisie est essentiellement constituée par de l'Al₂O₃-SiO₂ ou de l'Al₂O₃-SiO₂-Cr₂O₃, et en ce que le jet de liquide (2 ; 10, 11 ; 20, 21, 22) coupe l'écoulement de matière fibreuse fondue, la pression moyenne du liquide étant comprise entre 980,6 et 19 612 N/cm² (100 à 2 000 kgf/cm²), et son débit moyen compris entre 15 et 100 l/min.

2. Procédé selon la revendication 1, caractérisé en ce que l'écoulement de matière fibreuse fondue (3, 8, 15) est coupé par le jet de liquide (2 ; 10, 11 ; 20, 21, 22) selon un angle d'incidence (A).

3. Procédé selon l'une ou l'autre des revendications 1 et 2, caractérisé en ce que le jet de liquide (2) est obtenu au moyen d'une buse unique (1), de façon à couper l'écoulement de matière fibreuse fondue (3) lorsque celui-ci se déplace verticalement vers le bas.

4. Procédé selon l'une ou l'autre des revendications 2 et 3, caractérisé en ce que l'angle d'incidence (A) est compris entre 10 et 90° par rapport à l'axe de la buse (1).

5. Procédé selon l'une ou l'autre des revendications 1 et 2, caractérisé en ce que le jet de liquide (10, 11 ; 20, 21, 22) est obtenu au moyen d'un ensemble de buses (5, 6 ; 12, 13, 14), de telle sorte que plusieurs jets de liquide (10, 11 ; 20, 21, 22) coupent l'écoulement de matière fibreuse fondue (8, 15) lorsque celui-ci se déplace verticalement vers le bas.

6. Procédé selon la revendication 5, caractérisé en ce que les axes des buses (5, 6 ; 12, 13, 14) forment entre eux un angle (B) compris entre 30 et 65°, la composante principale de la vitesse des jets de liquide étant orientée dans la direction d'écoulement de la matière fibreuse fondue.

7. Procédé selon l'une quelconque des revendications 1 à 6, caractérisé en ce que la matière fibreuse fondue (3, 8, 15) s'écoule vers le bas à un débit compris entre 75 et 500 kg/h.

8. Procédé selon l'une quelconque des revendications 1 à 7, caractérisé en ce que l'énergie de production des fibres (4, 9, 25) par le jet de liquide (2 ; 10, 11 ; 20, 21, 22) est comprise entre 0,05 et 0,5 kWh/kg.

9. Procédé selon l'une quelconque des revendications 1 à 8, caractérisé en ce que la matière fibreuse fondue (3, 8, 15) contient de 35 à 65 % d'Al₂O₃, de 30 à 60 % de SiO₂, et des impuretés mineures.

10. Procédé selon l'une quelconque des revendications 1 à 8, caractérisé en ce que la matière fibreuse fondue (3, 8, 15) est constituée par une composition de fibres céramiques d'Al₂O₃-SiO₂-Cr₂O₃, contenant de 35 à 65 % d'Al₂O₃, de 30 à 60 % de SiO₂, de 1 à 6 % de Cr₂O₃, et des impuretés mineures.

11. Procédé selon l'une quelconque des revendications 5 à 10, caractérisé en ce que, parmi les buses, se trouvent au moins trois buses à jet d'eau de type rond (12, 13, 14) disposées de façon à ce que les buses à jet d'eau (12, 13, 14) puissent produire au moins trois jets d'eau (20, 21, 22) coupant l'écoulement de matière fibreuse fondue (15) avec une certaine incidence, chacun des jets d'eau (20, 21, 22) étant tangent à la surface externe de l'écoulement de matière fibreuse fondue (15).

12. Procédé selon la revendication 11, caractérisé en ce que les jets d'eau (20, 21, 22) coupent l'écoulement de matière fibreuse fondue (15) de façon à produire de nombreuses fibres (25), les jets d'eau (20, 21, 22) se déplaçant sans phénomène de divergence significatif.

13. Appareil de production de fibres comprenant :
- un moyen pour effectuer la fusion thermique d'un matériau fibreux en matière céramique comprenant de l'Al₂O₃ et du SiO₂, de façon à obtenir une matière fibreuse fondue (15),
- un moyen permettant d'évacuer la matière fibreuse fondue (15) sous la forme d'un écoulement continu de celle-ci,
- au moins un moyen à buse à jet de liquide (12, 13, 14) pour envoyer un jet de liquide sur l'écoulement de façon à produire de nombreuses fibres (25),
caractérisé en ce que ledit moyen à buse à jet de liquide (12, 13, 14) comprend au moins trois buses à jet d'eau de type rond (12, 13, 14) disposées de façon à ce que lesdites trois buses à jet d'eau au moins (12, 13, 14), puissent produire au moins trois jets d'eau (20, 21, 22) coupant ledit écoulement de ladite matière fibreuse fondue (15) avec une certaine incidence, chacune desdites buses à eau de type rond (12, 13, 14) ayant un diamètre de passage compris entre 0,5 et 3 mm, de façon à obtenir un jet de liquide ayant une pression moyenne comprise entre 980,6 et 19 612 N/cm² (100 à 2 000 kgf/cm²), et un débit moyen compris entre 15 et 100 l/min, de façon à pouvoir couper un écoulement de matière céramique constitué essentiellement d'Al₂O₃-SiO₂ ou d'Al₂O₃-SiO₂-Cr₂O₃.

14. Appareil selon la revendication 13, caractérisé en ce que chacun des jets d'eau (20, 21, 22) produit par les buses (12, 13, 14) soit tangent à la surface externe de l'écoulement de matière fibreuse fondue (15).

15. Appareil selon l'une ou l'autre des revendications 13 et 14, caractérisé en ce qu'un réservoir à liquide est placé sous les trois buses au moins (12, 13, 14) pour recueillir, à la fois, les fibres (4, 9, 25) et le liquide.
